# FASCICULE DE BREVET EUROPEEN

(11) **EP 1 261 684 B1**
(45) Date de publication et mention de la délivrance du brevet: **31.08.2005**
(21) Numéro de dépôt: 00951594.1
(22) Date de dépôt: 16.06.2000
(51) Int. Cl.: C11B 3/00

(54) **PROCEDE DE FRACTIONNEMENT D'UNE HUILE DE CUISSON**
VERFAHREN ZUM FRAKTIONIEREN EINES SPEISEÖLS
METHOD FOR FRACTIONATING COOKING OIL

(30) Priorité: 18.06.1999 FR 9907728
(43) Date de publication de la demande: 04.12.2002
(73) Titulaire: De Vittori, Carlo, 6967 Dino (CH)
(72) Inventeur: DE VITTORI, Carlo, 6967 Dino (CH); PERRUT, Michel, F-54000 Nancy (FR); MAJEWSKI, Wieslaw, F-54250 Laxou (FR)
(74) Mandataire: Puiroux, Guy
(86) Numéro de dépôt international: PCT/FR2000/001669
(87) Numéro de publication internationale: WO 2000/078902

(56) Documents cités:
- EP-A- 0 263 021
- WO-A-98/32819
- US-A- 3 966 981

## Description

La présente invention se rapporte à un procédé industriel de fractionnement de mélanges de lipides à l'aide d'un solvant porté à pression supercritique, c'est-à-dire un fluide en état supercritique ou un liquide subcritique, en vue d'obtenir, à partir d'huiles de cuisson usagées, une huile raffinée, décolorée et désodorisée, et débarrassée des produits d'oxydation et autres produits de dégradation formés au cours de l'utilisation de ces huiles.

La consommation d'aliments frits, notamment de pommes de terre frites, a fortement crû dans la plupart des pays développés, avec le développement de nouveaux types de restauration et de nouveaux aliments cuits industriellement. Ceci a logiquement induit une forte croissance de la production d'huiles de friture usagées. Ces dernières représentent un volume important de déchets, se chiffrant en centaines de milliers de tonnes par an en Europe, constituant une menace potentielle très sérieuse de pollution des eaux de surface. Comme actuellement une réutilisation n'est pas envisageable, elles sont généralement détruites par incinération et seul leur pouvoir calorifique est éventuellement récupéré.

La présente invention a pour but de proposer un procédé de traitement industriel de ces huiles de cuisson usagées afin d'obtenir une huile raffinée susceptible d'être utilisée comme composant d'aliments pour les animaux, en particulier pour les volailles.

Cette huile raffinée doit donc être exempte de produits susceptibles de nuire à la santé des animaux ainsi nourris, et doit de plus être obtenue avec un coût compatible avec une exploitation industrielle. Bien entendu cette huile raffinée ne devra pas non plus représenter de risques pour le consommateur de la viande des animaux ainsi nourris, ni apporter de mauvais goûts à cette viande. Il est donc essentiel d'éliminer les produits de dégradation de l'huile qui se forment en cours de cuisson et en particulier ceux qui confèrent à l'huile une couleur foncée, voire noire, et une odeur caractéristique très écoeurante qui caractérisent par exemple les huiles de friture après une utilisation prolongée.

Le procédé suivant l'invention fera appel à un procédé de séparation utilisant un fluide à pression supercritique.

On sait en effet que les corps sont généralement connus sous trois états : solide, liquide et gazeux. On passe de l'un à l'autre en faisant varier la température et/ou la pression. Or il existe un point au-delà duquel on peut passer de l'état liquide à l'état vapeur sans passer par une ébullition, ou à l'inverse par une condensation, mais de façon continue : ce point est appelé le point critique.

Dans ces conditions un fluide en état supercritique est un fluide qui se trouve dans un état caractérisé soit par une pression et une température respectivement supérieures à la pression et à la température critiques dans le cas d'un corps pur, soit par un point représentatif (pression, température) situé au-delà de l'enveloppe des points critiques représentés sur un diagramme (pression, température) dans le cas d'un mélange. Un tel fluide présente, pour de très nombreuses substances, un pouvoir solvant élevé sans commune mesure avec celui observé pour ce même fluide lorsqu'il se trouve à l'état de gaz comprimé. Il en est de même des liquides dits "subcritiques", c'est-à-dire qui se trouvent dans un état caractérisé soit par une pression supérieure à la pression critique et par une température inférieure à la température critique dans le cas d'un corps pur, soit par une pression supérieure aux pressions critiques et une température inférieure aux températures critiques des composants dans le cas d'un mélange.

Les variations importantes et modulables du pouvoir solvant de ces fluides sont d'ailleurs utilisées dans de nombreux procédés d'extraction (solide/fluide), de fractionnement (liquide/fluide), de chromatographie analytique ou préparative, de traitement des matériaux (céramiques, polymères). Des réactions chimiques ou biochimiques sont également réalisées dans de tels solvants.

Parmi les différents solvants qui sont utilisables sous une pression supercritique le dioxyde de carbone est tout particulièrement intéressant en raison de sa pression critique de 7,4 MPa et de sa température critique de 31°C, qui en font un solvant préféré dans de nombreuses applications, d'autant qu'il ne présente pas de toxicité et qu'il est disponible à très bas prix et en très grande quantité. En tant que solvant non polaire, le dioxyde de carbone porté à pression supercritique est parfois additionné d'un co-solvant constitué d'un solvant organique polaire qui modifie le pouvoir solvant de façon notable surtout vis-à-vis de molécules présentant une certaine polarité, l'éthanol étant souvent utilisé à cette fin.

L'un des avantages principaux des procédés dans lesquels on utilise un fluide à pression supercritique en tant que solvant réside dans la facilité de réaliser la séparation entre le solvant et les extraits et solutés recueillis, ainsi qu'il a été décrit dans de nombreuses publications et, pour certains aspects importants de mise en oeuvre, dans le brevet français FR-A-2 584 618. Les propriétés intéressantes de ces fluides sont d'ailleurs utilisées en extraction solide-fluide et fractionnement liquide-fluide, ainsi qu'il est décrit dans le document cité précédemment.

Le fractionnement des lipides par un fluide à pression supercritique a été décrit dans l'état antérieur de la technique, et on pourra se référer à un ouvrage récent "Supercritical Fluid technology in Oil and Lipid Chemistry" édité par J.W. KING et G.R. LIST. On a ainsi utilisé du dioxyde de carbone pur comme solvant des glycérides afin d'extraire les huiles de différentes sources naturelles telles que les graines oléagineuses. Les opérations de fractionnement de lipides à l'aide de solvants à pression supercritique se heurtent souvent à de sérieuses difficultés de mise en oeuvre, car les phases initiales ou résultantes sont souvent très pâteuses, ce qui rend le contact avec le fluide solvant difficile voire impossible à réaliser. Certains dispositifs ont été décrits pour traiter ce problème, comme par exemple un système d'extracteur à jet proposé par EGGERS E., WAGNER H., ("Proceedings of the Third International Symposium on Supercritical Fluids") pour déshuiler une lécithine de soja. Toutefois ce système ne comprend au plus qu'un étage théorique et on ne peut réaliser ainsi un fractionnement de composés très voisins requérant un nombre élevé de plateaux théoriques généralement mis en oeuvre sur des colonnes multiétagées à plateaux perforés ou garnissage fonctionnant à contre-courant. Cette méthode s'avère très performante ; cependant si elle est bien adaptée au traitement d'huiles de haute qualité et de prix élevé destinées à la diététique ou à la pharmacie, elle est d'un prix de revient souvent trop élevé pour assurer industriellement la purification de déchets comme les huiles de cuisson.

On a également proposé une autre méthode de fractionnement des lipides, notamment décrite dans le brevet américain US-A-5 759 549, dans lequel on adsorbe le mélange à fractionner sur un solide poreux, duquel les différents composants sont extraits successivement par un fluide à pression supercritique dont le pouvoir solvant et la polarité sont successivement augmentés. Ce procédé, dont le concept a été utilisé depuis plusieurs années, est connu sous le nom d'"extrographie". On notera que ce procédé peut être mis en oeuvre avec une haute sélectivité, par combinaison de la sélectivité du solide adsorbant et de celle du solvant à pression supercritique, mais requiert des moyens complexes et ne peut être mis en oeuvre qu'en mode batch, ce qui induit des frais opératoires très élevés.

On connaît par le document WO 98/32819 (Perrut Michel, Majewski Wieslaw, Breivik Harald, Norsk H) un procédé de purification d'acides gras insaturés, notamment des triglycérides, dans lequel on élimine les composés odorants et les produits de décomposition colorés au moyen d'un fluide supercritique dans une ou plusieurs colonnes à contre-courant.

On connaît par ailleurs par le brevet EP-A-0.263.021 (Nasa) l'utilisation d'un fluide supercritique en vue de la purification d'huiles de friture.

La présente invention a pour but de proposer un procédé permettant, à des fins de production industrielle, d'effectuer le fractionnement d'huiles de cuisson usagées en vue d'obtenir une huile raffinée et un résidu représentant un volume limité par rapport à la charge, à l'aide d'un solvant porté à pression supercritique, en utilisant une installation très simple et de mise en oeuvre peu onéreuse.

La présente invention a ainsi pour objet un procédé de fractionnement d'une huile de cuisson, notamment d'une huile de friture, au moyen d'un solvant à pression supercritique caractérisé en ce qu'il comporte les étapes consistant à :
- mettre en contact, dans un mélangeur une charge initiale d'huile de cuisson à fractionner avec le solvant à pression supercritique,
- séparer le mélange obtenu en deux phases dans un décanteur, à savoir une phase légère et une phase lourde,
- décomprimer la phase légère de façon à récupérer d'une part le solvant et le recycler et, d'autre part l'huile traitée,
- décomprimer la phase lourde et recycler une partie de celle-ci avec la charge initiale de façon à la traiter avec cette dernière.

Suivant l'invention ce fractionnement est réalisé sur un équipement consistant en un ensemble de type "mélangeur-décanteur" constitué d'un mélangeur au sein duquel l'huile à traiter et le solvant à pression supercritique sont intimement mélangés, et d'un décanteur maintenu à une pression inférieure ou égale à celle régnant dans le mélangeur, au sein duquel le mélange diphasique ainsi réalisé est séparé en ses deux phases, à savoir la phase lourde, constituée du résidu d'huile non extrait et d'une faible concentration de solvant à pression supercritique qui y est dissous, et la phase légère, constituée du fluide à pression supercritique et des composants de l'huile qui s'y sont dissous.

Dans un mode de mise en oeuvre de l'invention le fluide à pression supercritique est constitué d'un mélange d'un solvant organique dans le dioxyde de carbone. Dans ce cas, une faible quantité de ce solvant organique est encore présente dans le résidu après décompression de la phase lourde et sera séparée, dans un évaporateur classique par exemple, afin que le résidu puisse être plus facilement manipulé et éventuellement détruit, et que le solvant organique ainsi récupéré puisse être recyclé. Un tel solvant organique pourra être constitué notamment d'un hydrocarbure léger comptant entre 2 et 5 atomes de carbone, tel que notamment l'éthane le propane et le butane. La pression de mise en oeuvre sera comprise entre 7,4 MPa et 50 MPa et plus favorablement entre 20 MPa et 40 MPa, la température étant comprise quant à elle entre 0°C et 80°C. Un tel solvant pourra également être constitué d'un alcool, tel que notamment l'éthanol, ou d'une cétone, telle que notamment l'acétone, ou d'un ester, tel que notamment l'acétate d'éthyle.

La phase légère est décomprimée afin d'opérer la séparation du solvant de l'huile traitée qui constitue l'extrait. On rappellera que l'état antérieur de la technique propose des moyens permettant d'optimiser la séparation entre le solvant et l'extrait, en particulier grâce aux dispositifs décrits dans le brevet français FR-A-2.584.618, déjà cité. L'huile extraite se trouve ainsi débarrassée des produits de dégradation résultant de l'utilisation de l'huile initiale comme milieu de friture, en particulier de ceux qui lui donnent une couleur foncée, voire noire, et une odeur caractéristique très écoeurante.

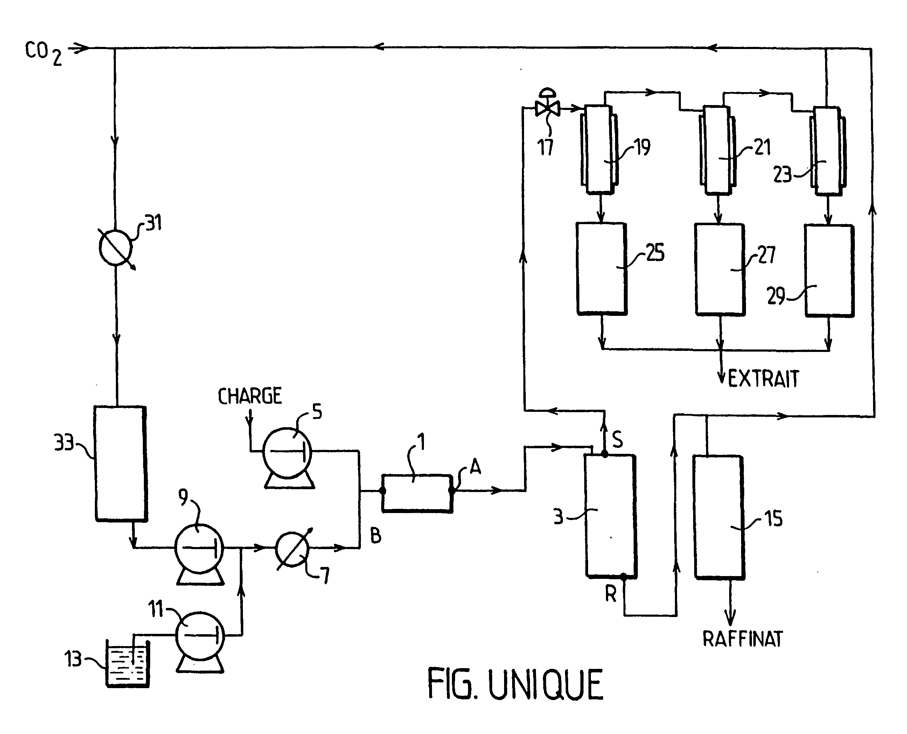

On décrira ci-après, à titre d'exemple non limitatif, une forme d'exécution de la présente invention, en référence au dessin annexé sur lequel la figure unique représente, de façon schématique, une installation permettant de mettre en oeuvre le procédé suivant l'invention.

Cette installation comprend essentiellement un mélangeur 1 dont la sortie A alimente un séparateur 3. Le mélangeur 1 est constitué d'un récipient cylindrique d'un diamètre de 58 mm et d'une hauteur de 1 m qui est rempli d'un garnissage d'acier inoxydable de type "Intalox" de 10 mm d'épaisseur et qui est doté d'une double-enveloppe permettant la circulation d'un fluide caloporteur. L'entrée B du mélangeur 1 est reliée à une pompe volumétrique à membrane 5 qui alimente celui-ci en huile de cuisson à purifier, après que cette dernière ait été portée à une température suffisante pour lui conférer une fluidité permettant son pompage. L'entrée B du mélangeur 1 est également reliée à un échangeur 7 qui est lui même relié à deux pompes, à savoir une pompe volumétrique à membrane 9 qui délivre le solvant, en l'espèce du dioxyde de carbone, et une pompe 11 de même type qui fournit un co-solvant, en l'espèce de l'éthanol, qui est contenu dans un réservoir 13. La pompe 9 comprime le dioxyde de carbone à sa pression supercritique, et l'échangeur 7 assure le réchauffage du solvant et du co-solvant. Après mélange le fluide admis dans le séparateur 3 est décanté dans celui-ci et est maintenu à une pression voisine, ou légèrement inférieure, de celle régnant dans le mélangeur 1.

Le raffinat sort en R au pied du séparateur 3, et est décomprimé jusqu'à la pression de recyclage du fluide, soit environ 4,5 MPa, dans un récipient 15 au sein duquel a lieu la détente, à une pression inférieure à celle régnant dans le séparateur 3, ce qui permet le dégazage du liquide et le recyclage partiel du solvant vaporisé. Le solvant chargé en extrait sort en tête S du séparateur 3, et est décomprimé via une vanne 17 de type déverseur. La baisse de pression entraîne la démixtion du mélange qui est admis dans un ensemble de séparateurs 19,21,23 constitués, selon le système décrit dans le brevet français FR-A-2 584 618, déjà cité, de chambres cycloniques permettant la séparation totale de la phase liquide et de la phase gazeuse avec apport de chaleur via les parois des séparateurs dont la double-enveloppe est parcourue par de l'eau chaude, ce qui permet d'apporter l'enthalpie requise pour assurer la vaporisation du solvant.

La phase liquide collectée dans les séparateurs 19,21,23 est soutirée, à pression atmosphérique, via un système de sas respectivement 25,27,29. Le solvant ainsi débarrassé de l'extrait et d'une partie du co-solvant est liquéfié dans un condenseur double-tube 31 dont le tube extérieur est parcouru par un mélange eau-éthylène glycol refroidi vers 0°C, et stocké à l'état liquide vers 5°C dans un réservoir 33 dont le niveau est maintenu stable par un appoint de dioxyde de carbone depuis une citerne extérieure et qui est relié à la pompe 9.

Comme le procédé requiert un débit d'huile important pour améliorer le contact entre l'huile et le fluide à pression supercritique, on notera qu'il est utile de recycler une partie du raffinat dans la charge, afin d'augmenter le rendement d'extraction en composés valorisables.

### EXEMPLE 1: Traitement d'une huile de friture usagée dans un mélangeur-décanteur :

On a traité dans une telle installation un mélange d'huiles de friture collectées auprès de différents utilisateurs, principalement des restaurants cuisant des pommes de terre frites. Cette huile se présente sous la forme d'un produit visqueux, de couleur brune très foncée et exhalant une odeur écoeurante caractéristique, telle qu'on peut la rencontrer dans certaines cuisines de restaurant mal ventilées.

Sa composition n'est pas connue de façon précise, mais elle est constituée d'un mélange de corps gras d'origine végétale : huiles de tournesol, de colza et d'arachide et huile de palme partiellement hydrogénée. Afin de la rendre facilement pompable, elle a été disposée dans un récipient chauffé à 60°C. Elle a ensuite été injectée par la pompe 5 dans l'installation décrite précédemment et a été mélangée dans le mélangeur 1 à un flux de fluide à pression supercritique constitué de dioxyde de carbone fourni par la pompe 5, avec une addition d'un co-solvant constitué d'éthanol fourni par la pompe 11 dans les conditions suivantes :
- Débit d'huile de friture à traiter : 4 kg/h
- Débit de dioxyde de carbone : 41,3 kg/h
- Débit d'éthanol : 3 kg/h
- Pression dans le mélangeur 1 et le séparateur 3 : 25 MPa
- Température dans le mélangeur 1 et le séparateur 3 : 50°C
- Pression dans les séparateurs 19,21,23 après détente du fluide : 4,5 MPa

Dans ces conditions, on obtient en sortie des sas 25,27,29 un extrait qui, après élimination de l'éthanol entraîné dans un évaporateur rotatif sous vide, se présente comme une huile jaune orangé, limpide et quasiment sans odeur.

Le résidu se présente par contre comme un liquide visqueux brun foncé avec une odeur encore plus écoeurante que celle de l'huile initiale. Sur une période de deux heures, il a été injecté 8 kg d'huile usagée, et collecté 2,8 kg d'huile raffinée et 5,2 kg de résidu.

### EXEMPLE 2: Traitement d'une huile de friture usagée dans un mélangeur-décanteur avec recyclage partiel du résidu :

On procède de la même manière que dans le cas de l'exemple précédent. Toutefois, la température dans le mélangeur 1 est portée à 70°C et on traite non plus l'huile usagée brute seule, mais on recycle environ 96% du résidu, le débit de l'huile injectée étant porté à 28 kg/h.

Dans ces conditions, l'extrait obtenu après élimination de l'éthanol, se présente comme une huile légèrement plus orangée que celle obtenue précédemment, mais toujours limpide et quasiment sans odeur. Le résidu est d'un aspect analogue à celui obtenu antérieurement. Sur une période de huit heures, il a été traité 18 kg d'huile usagée, et collecté 10,4 kg d'huile raffinée et 7,6 kg de résidu.

On comprend donc que le recyclage partiel du résidu permet une augmentation sensible du rendement final d'extraction de l'huile raffinée par rapport à l'huile initiale, qui atteint donc 58%, au lieu de 35% dans le cas décrit à l'exemple précédent.

## Revendications

1. Procédé de fractionnement d'une huile de cuisson, notamment d'une huile de friture, au moyen d'un solvant à pression supercritique, **caractérisé en ce qu'**il comporte les étapes consistant à :
- mettre en contact, dans un mélangeur (1) une charge initiale, d'huile de cuisson à fractionner avec le solvant à pression supercritique,
- séparer le mélange obtenu en deux phases dans un décanteur (3), à savoir une phase légère et une phase lourde,
- décomprimer la phase légère de façon à récupérer d'une part le solvant et d'autre part l'huile traitée,
- décomprimer la phase lourde et recycler une partie de celle-ci avec la charge initiale de façon à la traiter avec cette dernière.

2. Procédé suivant la revendication 1 **caractérisé en ce que** le fluide à pression supercritique est constitué de dioxyde de carbone.

3. Procédé suivant la revendication 2 **caractérisé en ce que** le fluide à pression supercritique est constitué d'un mélange d'un solvant organique dans le dioxyde de carbone à une pression comprise entre 7,4 MPa et 50 MPa, et plus favorablement entre 20 MPa et 40 MPa et à une température comprise entre 0°C et 80°C.

4. Procédé suivant la revendication 3 **caractérisé en ce que** le solvant est un hydrocarbure léger comptant entre 2 et 5 atomes de carbone, tel que notamment l'éthane le propane et le butane.

5. Procédé suivant la revendication 3 **caractérisé en ce que** le solvant est un alcool, et plus favorablement de l'éthanol.

6. Procédé suivant la revendication 3 **caractérisé en ce que** le solvant est une cétone, et plus favorablement de l'acétone.

7. Procédé suivant la revendication 3 **caractérisé en ce que** le solvant est un ester, et plus favorablement de l'acétate d'éthyle.

## Claims

1. Method for fractionating a cooking oil, particularly an oil for frying, by means of a solvent at supercritical pressure, **characterized in that** it comprises the steps consisting in:
- placing in contact, in a mixer (1) an initial charge of cooking oil to be fractionated with the solvent at supercritical pressure,
- separating the mixture obtained into two phases in a decanter (3), namely a light phase and a heavy phase,
- decompressing the light phase so as to recover, on the one hand, the solvent and, on the other hand, the treated oil,
- decompressing the heavy phase and recycling a part thereof with the initial charge so as to treat it with the latter.

2. Method according to Claim 1, **characterized in that** the fluid at supercritical pressure is constituted by carbon dioxide.

3. Method according to Claim 2, **characterized in that** the fluid at supercritical pressure is constituted by a mixture of an organic solvent in carbon dioxide at a pressure included between 7.4 MPa and 50 MPa, and more favourably between 20 MPa and 40 MPa and at a temperature included between 0°C and 80°C.

4. Method according to Claim 3, **characterized in that** the solvent is a light hydrocarbon counting between 2 and 5 atoms of carbon, such as in particular ethane, propane and butane.

5. Method according to Claim 3, **characterized in that** the solvent is an alcohol, and more favourably ethanol.

6. Method according to Claim 3, **characterized in that** the solvent is a ketone, and more favourably acetone.

7. Method according to Claim 3, **characterized in that** the solvent is an ester, and more favourably ethyl acetate.

## Patentansprüche

1. Verfahren zur Fraktionierung eines Kochöls, insbesondere eines Frittieröls, mittels eines auf überkritischem Druck befindlichen Lösungsmittels, **dadurch gekennzeichnet, dass** es die folgenden Schritte umfasst:
in einem Mischer (1) wird eine Anfangsfüllung aus zu fraktionierendem Kochöl mit dem auf überkritischem Druck befindlichen Lösungsmittel in Kontakt gebracht,
die erhaltene Mischung wird in einer Dekantiereinrichtung (3) in zwei Phasen getrennt, und zwar eine leichte Phase und eine schwere Phase,
die leichte Phase wird dekomprimiert, so dass zum einen das Lösungsmittel und zum anderen das behandelte Öl rückgewonnen wird,
die schwere Phase wird dekomprimiert und ein Teil von dieser mit der Anfangsfüllung rezykliert, so dass eine Behandlung von diesem zusammen mit letzterer erfolgt.

2. Verfahren nach Anspruch 1, **dadurch gekennzeichnet, dass** das auf überkritischem Druck befindliche Fluid aus Kohlendioxid besteht.

3. Verfahren nach Anspruch 2, **dadurch gekennzeichnet, dass** das auf überkritischem Druck befindliche Fluid aus einer Mischung eines organischen Lösungsmittels in Kohlendioxid besteht, die sich auf einem Druck zwischen 7,4 MPa und 50 MPa, und bevorzugter zwischen 20 MPa und 40 MPa, und einer Temperatur zwischen 0°C und 80°C befindet.

4. Verfahren nach Anspruch 3, **dadurch gekennzeichnet, dass** das Lösungsmittel ein leichter, 2 bis 5 Kohlenstoffatome aufweisender Kohlenwasserstoff, wie beispielsweise Ethan, Propan und Butan ist.

5. Verfahren nach Anspruch 3, **dadurch gekennzeichnet, dass** das Lösungsmittel ein Alkohol, und bevorzugter Ethanol ist.

6. Verfahren nach Anspruch 3, **dadurch gekennzeichnet, dass** das Lösungsmittel ein Keton, und bevorzugter Aceton ist.

7. Verfahren nach Anspruch 3, **dadurch gekennzeichnet, dass** das Lösungsmittel ein Ester, und bevorzugter Ethylacetat ist.
